# EUROPÄISCHE PATENTSCHRIFT

(11) **EP 1 430 652 B1**
(45) Veröffentlichungstag und Bekanntmachung des Hinweises auf die Patenterteilung: **03.01.2007**
(21) Anmeldenummer: 02800534.6
(22) Anmeldetag: 06.09.2002
(51) Int. Cl.: H04L 12/28

(54) **VERFAHREN ZUR ANMELDUNG EINES TEILNEHMERS AN EINEM KOMMUNIKATIONSSYSTEM**
METHOD FOR REGISTRATION OF A SUBSCRIBER AT A COMMUNICATION SYSTEM
PROCEDE D'ASSOCIATION D'UN ABONNE A UN SYSTEME DE COMMUNICATION

(30) Priorität: 28.09.2001 DE 10147896
(43) Veröffentlichungstag der Anmeldung: 23.06.2004
(73) Patentinhaber: SIEMENS AKTIENGESELLSCHAFT, 80333 München (DE)
(72) Erfinder: WILLE, Klaus, 81679 München (DE); SCHAADE, Stephan, 86807 Buchlö (DE); BLICKBERNDT, Dirk, 41516 Grevenbroich (DE)
(86) Internationale Anmeldenummer: PCT/DE2002/003304
(87) Internationale Veröffentlichungsnummer: WO 2003/032578

(56) Entgegenhaltungen:
- WO-A-00/69186
- WO-A-01/67684
- WO-A-99/09688
- DE-A- 19 548 394
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, Nr. 3, 1998, Seiten 110-117, XP000783249 ISSN: 0014-0171
- M. ALLERBECK ET AL.: "Mobile Kommunikation mit der HICOM-Chipkarte" TELECOM REPORT 9, Bd. Heft, Nr. 4, 1986, Seiten 270-273,

## Beschreibung

Die Erfindung betrifft ein Verfahren zur Anmeldung eines Teilnehmers an einem Kommunikationssystem sowie ein entsprechendes Kommunikationssystem.

In vielen Kommunikationssystemen ist eine Funktion vorgesehen, die einem Teilnehmer eine Individualisierung eines innerhalb des Kommunikationssystems beliebigen Kommunikationsendgeräts ermöglicht. Eine derartige Funktion ist in zeitgemäßen Kommunikationssystemen als ein Leistungsmerkmal "Mobiler Teilnehmer in einem Kommunikationssystem" bekannt. Unter dieser Individualisierung wird verstanden, dass dem mobilen Teilnehmer nach einem erfolgten Anmeldeprozess am entsprechenden Kommunikationsendgerät seine persönlichen Berechtigungen, spezifische Funktionen seiner Teilnehmergruppenzugehörigkeit, seine persönliche Gesprächsdatenerfassung und Gesprächsgebührenzuordnung sowie seine persönlichen Leistungsmerkmalausgestaltungen zur Verfügung stehen. Nach dem an diesem Kommunikationsendgerät erfolgten Anmeldeprozess werden alle an die Rufnummer des mobilen Teilnehmers gerichteten Anrufe zu diesem Kommunikationsendgerät durchgestellt.

Für diesen Anmeldeprozess ist u.a. eine Identifizierung des mobilen Teilnehmers erforderlich, die z.B. durch Eingabe einer dem mobilen Teilnehmer zugeordneten Rufnummer erfolgt. Ein weiterer Bestandteil des Anmeldeprozesses ist eine Autorisierung des mobilen Teilnehmers, die z.B. durch eine anschließende Eingabe einer persönlichen Identifikationsnummer ("PIN") erfolgt. Statt der Eingabe von Identifizierungsinformation und PIN unterstützen viele Kommunikationsendgeräte auch eine Authentifizierung mittels einer dem mobilen Teilnehmer zugehörigen Chipkarte.

Zur Anmeldung von drahtlosen Kommunikationsendgeräten an einem Kommunikationssystem sind Verfahren bekannt. Aus der Druckschrift WO 00/69186 A1 ist ein Verfahren und Mittel zum Aufbau eines zellulären Kommunikationssystems unter Verwendung mehrerer lokaler drahtloser Netzwerke offenbart. Eine drahtlose Einheit wird dabei im lokalen drahtlosen Netzwerk registriert, indem im Funkbereich der drahtlosen Einheit in regelmäßigen Intervallen einer Vermittlungsstation über eine Anfrage-Bestätigungssequenz aufgefunden wird. Anschließend erfolgt eine Übermittlung von Autorisierungsinformation der drahtlosen Einheit an die Vermittlungsstation. Nach einer Identifizierung und Authentifizierung der drahtlosen mobilen Einheit wird diese im Kommunikationssystem angemeldet. Dieses Verfahren setzt selbstverständlich voraus, dass die Vermittlungsstation bereits im Kommunikationssystem angemeldet ist, oder als festinstallierter Bestandteil dieses Kommunikationsystems eine Autorisierung ausser Frage steht.

In der Druckschrift WO 99/09688 A1 ist ein Verfahren und Mittel zur Ausbildung eines Durchgangspfades für eine Kommunikationsverbindung offenbart, bei der eine erste Signalisierungsverbindung zwischen einem mobilen Kommunikationsendgerät und einem drahtgebundenen Kommunikationsendgerät und in Folge eine zweite Signalisierungsverbindung zwischen dem drahtgebundenen Kommunikationsendgerät und einer Basisstation ausgebildet wird, wobei mobilitätsbezogene Signalsierungsinformationen über die beiden Signalisierungsverbindungen ausgetauscht werden.

Aus der Druckschrift DE 195 48 394 A1 ist ein Verfahren zur Einstellung von Präferenzinformationen durch eine Gebervorrichtung, wie beispielsweise einer Speicherkarte oder einer breit zugänglichen Datenbasis bekannt.

Aus der Druckschrift Allerbeck, M. et al.: "Mobile Kommunikation mit der HICOM-Chipkarte", in: telecom report 9, 1986, Heft 4. Seiten 270 bis 273 ist ein Verfahren zur Anmeldung eines Teilnehmers an einem Kommunikationssystem bekannt, mit einem dem Kommunikationssystem zugeordneten Kommunikationsendgerät, das dem Teilnehmer durch die Anmeldung zuordenbar ist sowie einer Chipkarte zum Übertragen von Daten für eine Authentifizierung des Teilnehmers.

Eine Aufgabe der Erfindung ist es, ein Verfahren anzugeben, diesen Anmeldeprozess für einen mobilen Teilnehmer unter Beibehaltung einer sicheren Authentifizierung zu vereinfachen.

Eine Lösung der Aufgabe erfolgt durch die Merkmale des Patentanspruchs 1 bzw. 7.

Erfindungsgemäß erfolgt der Anmeldeprozess durch Austausch von Authentifizierungsinformationen zwischen dem Kommunikationsendgerät und einer dem mobilen Teilnehmer individuell zugehörigen portablen Einheit über eine Luftschnittstelle.

Ein wesentlicher Vorteil des erfindungsgemäßen Verfahrens ist darin zu sehen, dass eine aufwändige und fehleranfällige Eingabe von Authentifizierungsinformationen bzw. eine umständlich zu handhabende Verwendung einer Chipkarte entfällt. Statt dessen wird durch die vorteilhafte Verwendung einer Luftschnittstelle der Anmeldungsprozess dahingehend vereinfacht, dass der mobile Teilnehmer seine portable Einheit in der Nähe der Luftschnittstelle platziert und der Anmeldungsprozess ohne weiteres Zutun des mobilen Teilnehmers vonstatten geht. Die Luftschnittstelle kann dabei zur Unterstützung eines optischen Datenaustausches - z.B. über eine Infrarotschnittstelle - oder über einen Datenaustausch in einem nichtsichtbaren elektromagnetischen Wellenbereich ausgestaltet sein.

Vorteilhafte Weiterbildungen der Erfindung sind in den Unteransprüchen angegeben.

Mit einer Verwendung von portablen Einheiten, die eine Authentifizierung des Benutzers zur Inbetriebnahme erfordern, ist eine vorteilhafte Sicherheit des mobilen Teilnehmers vor Missbräuchen im Falle des Verlusts seiner ihm individuell zugeordneten portablen Einheit gegeben. Portable eine Authentifizierung des Benutzers zur Inbetriebnahme erfordernde Einrichtungen sind z.B. mobile Rechnereinheiten wie Notebooks, PDAs (Personal Digital Assistant), mobile Kommunikationsendgeräte usw. Derlei portable Einheiten werden von einem wachsenden Personenkreis nahezu ständig mit sich geführt und bieten durch die notwendige Authentifizierung bei deren Inbetriebnahme eine höhere Authentifizierungssicherheit für den mobilen Teilnehmer.

Mit einer vorteilhaften Ausgestaltung der Luftschnittstelle gemäß des "Bluetooth"-Standards ist eine vorteilhafte Verwendung einer standardisierten Infrastruktur gegeben, die zunehmend bei elektronischen Geräten mit Kommunikationsschnittstellen angewandt wird. Zudem werden unter Verwendung von Bluetooth Daten im Mikrowellenbereich ausgetauscht, sodass die Gestaltung der Luftschnittstelle nicht auf eine Anordnung der Kommunikationspartner in unmittelbaren Sichtkontakt beschränkt ist.

Eine besonders vorteilhafte Ausgestaltung der Erfindung ist die Ausstattung der portable Einheit mit Funktionalitäten eines mobilen Kommunikationsendgeräts. Mit einer derartigen Ausgestaltung ist nicht nur die Authentifizierung des mobilen Teilnehmers, sondern auch die Kommunikation mithilfe der portablen Einheit gewährleistet. Ein mobiler Teilnehmer kann sich in dieser Weise durch Mitnahme eines - z.B. mit einer. GSM-Schnittstelle und einer Bluetooth-Schnittstelle ausgestalteten - Mobiltelephons beliebig innerhalb eines erfindungsgemäß ausgestalteten Kommunikationssystems bewegen, z.B. an den Arbeitsplatz einer über ein erfindungsgemäß ausgestaltetes Kommunikationsendgerät verfügende Person, an dem er vorteilhaft ohne Eingabe einer Autorisierungsinformation oder Verwendung einer Chipkarte angemeldet wird. Vorteilhaft kann dieser mobile Teilnehmer bei eintreffenden oder ausgehenden Kommunikationsverbindungen sein Mobiltelephon statt des Kommunikationsendgeräts der anderen Person verwenden.

Mit der vorteilhaften Verwendung zweier Basiskanäle zum Austausch von Nutzdaten des Kommunikationsendgeräts mit einer Kommunikationseinrichtung können sowohl der mobile Teilnehmer als auch der über das Kommunikationsendgerät verfügende Teilnehmer gleichzeitig kommunizieren.

Ein Ausführungsbeispiel der Erfindung wird im folgenden anhand der Zeichnung näher erläutert.

Dabei zeigen:
- Fig. 1:: ein Strukturbild zur schematischen Darstellung eines erfindungsgemäßen Kommunikationssystems; und
- Fig. 2:: ein Strukturbild zur schematischen Darstellung einer Kommunikation im erfindungsgemäßen Kommunikationssystem.

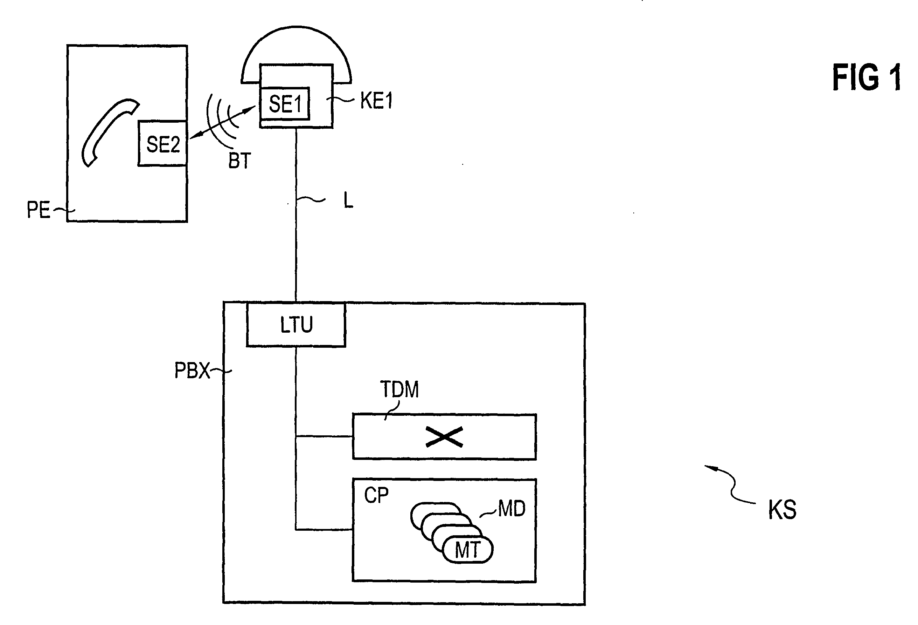

Fig. 1 zeigt ein Kommunikationssystem KS mit einer Kommunikationseinrichtung PBX, einem Kommunikationsendgerät KE1 und einer über eine Luftschnittstelle BT mit dem Kommunikationsendgerät KE1 kommunizierenden portablen Einheit PE. Das Kommunikationssystem arbeitet beispielsweise nach einem dem Fachmann als ISDN (Integrated Services Digital Network) bekannten Standard.

Über die Luftschnittstelle BT erfolgt eine bidirektionale Datenübertragung zwischen einer dem Kommunikationsendgerät KE1 zugeordneten ersten Sende-/Empfangseinheit SE1 und einer der portablen Einheit PE zugeordneten zweiten Sende-/Empfangseinheit SE2. Diese Luftschnittstelle kann wie im Ausführungsbeispiel gemäß einer dem Fachmann als Bluetooth-Standard geläufigen Ausgestaltung als Funkschnittstelle oder auch gemäß einer dem Fachmann als IrDA-Standard (Infrared Data Association) geläufigen Ausgestaltung als optische Schnittstelle ausgebildet sein.

Die Kommunikationseinrichtung PBX arbeitet nach einem zeitschlitzorientierten Vermittlungsprinzip - in der Fachwelt oftmals als "Time Division Multiplex", TDM bezeichnet - und verfügt demgemäss über ein entsprechendes Koppelfeld TDM. Eine Nutz- bzw. Signalisierungsinformation übertragende Leitung L des Kommunikationsendgeräts KE1 ist über eine der Kommunikationseinrichtung PBX zugeordnete Anschlusseinheit LTU mit dem Koppelfeld TDM bzw. mit einer Vermittlungs- und Leistungsmerkmalsteuerung CP - einem weiteren zentralen Bestandteil der Kommunikationseinrichtung PBX - verbunden.

Signalisierungsinformationen entsprechen Daten, die beispielsweise bei einer ISDN-Verbindung über einen sogenannten - nicht dargestellten - D-Kanal gesendet werden und Daten zur Verbindungssteuerung, Signalisierung usw. enthalten. Ein weiterer Bestandteil der zwischen dem Kommunikationsendgerät KE1 und der Vermittlungseinrichtung PBX ausgetauschten Daten sind die Nutzinformationen, die z.B. Sprach- und/oder Videokommunikationsdaten enthalten. In einem ISDN-Kommunikationssystem KS werden diese Nutzinformationen über einen bzw. mehrere sogenannten - nicht dargestellte - B-Kanäle übertragen.

Im ISDN-basierten Kommunikationssystem KS ist die Kommunikationseinrichtung KE1 über die Leitung L mit zwei B-Kanäle an die Anschlusseinheit angebunden.

In der Vermittlungs- und Leistungsmerkmalsteuerung CP werden mehrere softwaretechnische - u.a. die Steuerung von Verbindungen, Leistungsmerkmalprozesse handhabende - Funktionsmodule MD verwaltet. Ein im Kommunikationssystem KS aufrufbares Leistungsmerkmal "Mobiler Teilnehmer in einem Kommunikationssystem" wird von der Vermittlungs- und Leistungsmerkmalsteuerung CP über einen Aufruf des Softwaremoduls Mobiler Teilnehmer MT verarbeitet.

Ein die portable Einheit PE mit sich führender mobiler Teilnehmer befindet sich in einer lokalen Nähe zum Kommunikationsendgerät KE1. Die portable Einheit PE ist beispielsweise in einer Ausführungsform als mobiles Kommunikationsendgerät oder auch als persönlicher digitaler Assistent (Personal Digital Assistant, PDA) verwirklicht.

Im vorliegenden Ausführungsbeispiel beinhaltet die portable Einheit PE Funktionalitäten eines mobilen Kommunikationsendgeräts. Wie durch das Hörersymbol als Bestandteil der portablen Einheit PE in der Zeichnung dargestellt, beinhalten diese Funktionalitäten auch die Bereitstellung einer akustischen Informationsein- und ausgabe.

Im folgenden wird der Ablauf eines Anmeldevorgangs des mobilen Teilnehmers am Kommunikationssystem KS dargestellt.

Der mobile Teilnehmer aktiviert z.B. durch Betätigen eines - nicht dargestellten - Eingabeelements an seiner portablen Einheit PE oder am Kommunikationsendgerät KE1 das Leistungsmerkmal "Mobiler Teilnehmer in einem Kommunikationssystem". In der portablen Einheit PE wird daraufhin eine Identifikations- und Autorisierungsdaten des Teilnehmers enthaltende Anforderung automatisch generiert. Diese Anforderung wird über die Luftschnittstelle BT an das Kommunikationsendgerät KE1 übermittelt und als Signalisierungsinformation über die Leitung L an die Vermittlungs- und Leistungsmerkmalsteuerung CP gesendet. In der Vermittlungs- und Leistungsmerkmalsteuerung CP wird das Softwaremodul Mobiler Teilnehmer MT aufgerufen, das anhand der von der portablen Einheit PE übertragenen Identifikations- und Autorisierungsdaten Berechtigungen des mobilen Teilnehmers im Kommunikationssystem KS überprüft. Nach Sicherstellung der Authentizität des mobilen Teilnehmers werden seine persönlichen Berechtigungen, spezifische Funktionen seiner Teilnehmergruppenzugehörigkeit, seine persönliche Gesprächsdatenerfassung und Gesprächsgebührenzuordnung sowie seine persönlichen Leistungsmerkmalausgestaltungen am Kommunikationsendgerät KE1 eingerichtet. Außerdem werden alle an die Rufnummer des mobilen Teilnehmers gerichteten Anrufe zu diesem Kommunikationsendgerät KE1 durchgestellt.

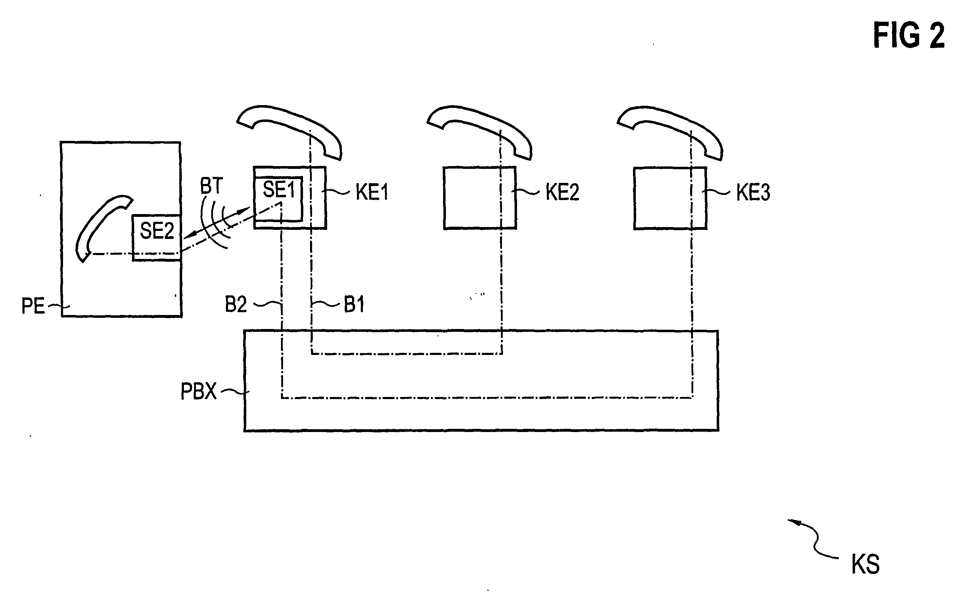

Fig. 2 zeigt ein Kommunikationssystem KS mit der Kommunikationseinrichtung PBX, dem Kommunikationsendgerät KE1 und der über eine Luftschnittstelle BT mit dem Kommunikationsendgerät KE1 kommunizierenden portablen Einheit PE. Das erste Kommunikationsendgerät KE1 ist über eine erste Kommunikationsverbindung B1 mit einem zweiten Kommunikationsendgerät KE2 verbunden. Zusätzlich zu dieser - strichpunktiert dargestellte - ersten Kommunikationsverbindung B1 ist über die beiden am ersten Kommunikationsendgerät KE1 verfügbaren B-Kanälen eine zweite - strichpunktiert dargestellte - Kommunikationsverbindung B2 zwischen dem ersten Kommunikationsendgeräts KE1 und einem dritten Kommunikationsendgerät KE3 durch die Kommunikationseinrichtung PBX geschaltet. Am ersten Kommunikationsendgerät KE1 werden die dieser zweiten Kommunikationsverbindung B2 zugehörigen Nutzdaten über die Luftschnittstelle BT mit der portablen Einheit PE ausgetauscht.

Durch die Anbindung des ersten Kommunikationsendgeräts KE1 mit der Kommunikationseinrichtung PBX über zwei B-Kanäle ist die portable Einheit PE also unabhängig von einer Benutzung der ersten Kommunikationseinrichtung KE1 für ankommende oder abgehende Kommunikationsverbindungen B2 verfügbar.

Ist das erste Kommunikationsendgerät KE1 in einer - nicht dargestellten - weiteren Ausführungsform lediglich über einen B-Kanal an die Kommunikationseinrichtung PBX angebunden, ist das erste Kommunikationsendgerät KE1 während einer bestehenden Kommunikationsverbindung B2 der portablen Einheit PE für ankommende oder abgehende Kommunikationsverbindungen gesperrt.

## Patentansprüche

1. Verfahren zur Anmeldung eines Teilnehmers an einem Kommunikationssystem (KS), mit
einem dem Kommunikationssystem (KS) zugeordneten und eine erste Sende-/Empfangseinheit (SE1) für eine Lüftschnittstelle (BT) aufweisenden Kommunikationsendgerät (KE1), das dem Teilnehmer durch die Anmeldung zuordenbar ist, und,
einer eine zweite Sende-/Empfangseinheit (SE2) für die Luftschnittstelle (BT) und zumindest teilweise Funktionalitäten eines mobilen Kommunikationsendgeräts aufweisenden portablen Einheit (PE),
wobei Daten für eine Authentifizierung des Teilnehmers über die Luftschnittstelle (BT) ausgetauscht werden und der Teilnehmer nach einer erfolgreichen Authentifizierung am Kommunikationssystem (KS) angemeldet und das Kommunikationsendgerät (KE1) dem Teilnehmer zugeordnet wird, und,
wobei für eine Kommunikation des Teilnehmers mit einem weiteren rufenden oder gerufenen Teilnehmer Signalisierungs- und/oder Nutzdaten über die Luftschnittstelle (BT) zwischen der portablen Einheit (PE) und dem Kommunikationsendgerät (KE1) ausgetauscht werden.

2. Verfahren nach Anspruch 1,
**dadurch gekennzeichnet,**
**dass** für eine Inbetriebnahme der portablen Einheit (PE) eine Authentifizierung erforderlich ist.

3. Verfahren nach einem der vorhergehenden Ansprüche,
**dadurch gekennzeichnet,**
**dass** die Luftschnittstelle (BT) gemäß des Bluetooth-Standard ausgestaltet ist.

4. Verfahren nach einem der vorhergehenden Ansprüche,
**dadurch gekennzeichnet,**
**dass** nach erfolgter Anmeldung am Kommunikationssystem (KS) ein Leistungsmerkmal "Mobiler Teilnehmer in einem Kommunikationssystem" (MT) aktivierbar ist.

5. Verfahren nach Anspruch 4,
**dadurch gekennzeichnet,**
**dass** nach erfolgter Aktivierung des Leistungsmerkmals "Mobiler Teilnehmer in einem Kommunikationssystem" (MT) an den Teilnehmer gerichtete Anrufe an das Kommunikationsendgerät (KE1) durchgestellt werden.

6. Verfahren nach einem der vorhergehenden Ansprüche,
**dadurch gekennzeichnet,**
**dass** das Kommunikationsendgerät (KE1) über zwei Basiskanäle (B1,B2) mit einer Kommunikationseinrichtung (PBX) des Kommunikationssystems (KS) verbunden ist.

7. Kommunikationssystem (KS) mit
einer die Anmeldung eines Teilnehmers an Kommunikationsendgeräten (KE1) unterstützenden Kommunikationssystemzentralen Kommunikationseinrichtung (PBX); und;
einem dem Kommunikationssystem (KS) zugeordneten und eine erste Sende-/Empfangseinheit (SE1) für eine Luftschnittstelle (BT) aufweisenden Kommunikationsendgerät (KE1) für einen Austausch von Authentifizierungs- und/oder Kommunikationsinformationen des Teilnehmers über die Luftschnittstelle (BT); und
einer eine zweite Sende-/Empfangseinheit (SE2) für die Luftschnittstelle (BT) sowie zumindest teilweise Funktionalitäten eines mobilen Kommunikationsendgeräts aufweisenden portablen Einheit (PE) zum Austausch von Authentifizierungs- und/oder Kommunikationsinformationen und von Signalisierungs- und/oder Nutzdaten mit dem Kommunikationsendgerät (KE1) für eine Kommunikation des Teilnehmers mit einem weiteren rufenden oder gerufenen Teilnehmer über die portable Einheit (PE).

8. Kommunikationssystem (KS) nach Anspruch 7,
**dadurch gekennzeichnet,**
**dass** in der Kommunikationseinrichtung (PBX) eine Vermittlungs- und Leistungsmerkmalsteuerung (CP) für eine Unterstützung des Leistungsmerkmals "Mobiler Teilnehmer in einem Kommunikationssystem" (MT) implementiert ist.

9. Kommunikationssystem (KS) nach einem der Ansprüche 7 bis 8,
**dadurch gekennzeichnet,**
**dass** die portable Einheit (PE) durch ein mobiles Kommunikationsendgerät realisiert ist.

10. Kommunikationssystem (KS) nach einem der Ansprüche 7 bis 9,
**dadurch gekennzeichnet,**
**dass** das Kommunikationsendgerät (KE1) ein von der Kommunikationseinrichtung (PBX) gesteuertes Kommunikationsendgerät ist.

11. Kommunikationssystem (KS) nach einem der Ansprüche 7 bis 10,
**dadurch gekennzeichnet,**
**dass** die Luftschnittstelle (BT) gemäß des Bluetooth-Standard ausgestaltet ist.

## Claims

1. Method for registering a subscriber at a communication system (KS), with
a communication terminal (KE1) assigned to the communication system (KS) and comprising a first transceiver unit (SE1) for an air interface (BT), said communication terminal being assignable to the subscriber by means of the registration, and,
a portable unit (PE) comprising a second transceiver unit (SE2) for the air interface (BT) and at least partially comprising functionalities of a mobile communication terminal, with data for an authentication of the subscriber being exchanged by way of the air interface (BT) and the subscriber registering at the communication system (KS) following a successful authentication and the communication terminal (KE1) being assigned to the subscriber, and, with signalling and/or useful data being exchanged between the portable unit (PE) and the communication device (KE1) by way of the air interface (BT) for a communication of the subscriber with a further calling or called subscriber.

2. Method according to claim 1, **characterised in that** authentication is necessary for commissioning the portable unit (PE).

3. Method according to one of the preceding claims, **characterised in that** the air interface (BT) is designed according to the Bluetooth Standard.

4. Method according to one of the preceding claims, **characterised in that** following successful registration at the communication system (KS), a service feature "Mobile subscriber in a communication system" (MT) can be activated.

5. Method according to claim 4, **characterised in that** following successful activation of the service feature "Mobile subscriber in a communication system" (MT), calls directed to the subscriber are passed through to the communication terminal (KE1).

6. Method according to one of the preceding claims, **characterised in that** the communication terminal (KE1) is linked to a communication device (PBX) of the communication system (KS) by way of two B channels (B1, B2).

7. Communication system (KS) with
a communication device (PBX) central to a communication system and supporting the registration of a subscriber at communication terminals (KE1),
a communication terminal (KE1) assigned to the communication system (KS) and comprising a first transceiver unit (SE1) for an air interface (BT) for an exchange of authentication and/or communication information of the subscriber by way of the air interface (BT); and
a portable unit (PE) comprising a second transceiver unit (SE2) for the air interface (BT) as well as at least partial functionalities of a mobile communication terminal for exchanging authentication and/or communication information and signalling and/or useful data with the communication terminal (KE1) for a communication of the subscriber with a further calling or called subscriber by way of the portable unit (PE).

8. Communication system (KS) according to claim 7,
**characterised in that**
a switching and service feature controller (CP) for supporting the service feature "Mobile subscriber in a communication system" (MT) is implemented in the communication device (PBX).

9. Communication system (KS) according to one of claims 7 to 8, **characterised in that**
the portable unit (PE) is realised by a mobile communication terminal.

10. Communication system (KS) according to one of claims 7 to 9, **characterised in that** the communication terminal (KE1) is a communication terminal controlled by the communication device (PBX).

11. Communication system (KS) according to one of claims 7 to 10, **characterised in that** the air interface (BT) is configured according to the Bluetooth standard.

## Revendications

1. Procédé pour l'ouverture d'une session d'un abonné dans un système de communication (KS), avec
un terminal de communication (KE1) attribué au système de communication (KS) et présentant une première unité d'émission/réception (SE1) pour une interface radio (BT), qui peut être attribuée à l'abonné par l'ouverture de session, et
une unité portable (PE) présentant une seconde unité d'émission/réception (SE2) pour l'interface radio (BT) et présentant au moins en partie des fonctionnalités d'un terminal de communication mobile,
des données étant échangées pour une authentification de l'abonné par l'interface radio (BT) et l'abonné étant pris en charge après une authentification réussie sur le système de communication (KS) et le terminal de communication (KE1) étant attribué à l'abonné, et des données de signalisation et/ou des données utiles étant échangées par l'interface radio (BT) entre l'unité portable (PE) et le terminal de communication (KE1) pour une communication de l'abonné avec un autre abonné appelant ou appelé.

2. Procédé selon la revendication 1,
**caractérisé en ce que**
une authentification est nécessaire pour une mise en service de l'unité portable (PE).

3. Procédé selon l'une quelconque des revendications précédentes,
**caractérisé en ce que**
l'interface (BT) est conçue selon le standard Bluetooth.

4. Procédé selon l'une quelconque des revendications précédentes,
**caractérisé en ce que**
un complément de service "abonné mobile dans un système de communication" (MT) peut être activé une fois l'ouverture de session effectuée sur le système de communication (KS).

5. Procédé selon la revendication 4,
**caractérisé en ce que**,
après activation du complément de service "abonné mobile dans un système de communication" (MT), des appels adressés à l'abonné sont envoyés au terminal de communication (KE1).

6. Procédé selon l'une quelconque des revendications précédentes,
**caractérisé en ce que**
le terminal de communication (KE1) est relié au moyen de deux canaux de base (B1, B2) à un dispositif de communication (PBX) du système de communication (KS).

7. Système de communication (KS) avec
un dispositif de communication (PBX) central au système de communication supportant l'ouverture de session d'un abonné dans des terminaux de communication (KE1) ; et
un terminal de communication (KE1) attribué au système de communication (KS) et présentant une première unité d'émission/réception (SE1) pour une interface radio (BT) pour l'échange d'informations d'authentification et/ou de communication des abonnés via l'interface radio (BT) ; et
une unité portable (PE) présentant une seconde unité d'émission/réception (SE2) pour l'interface radio (BT) et au moins partiellement des fonctionnalités d'un terminal de communication mobile pour l'échange d'informations d'authentification et/ou de communication et de données de signalisation et/ou de données utiles avec le terminal de communication (KE1) pour une communication de l'abonné avec un autre abonné appelant ou appelé au moyen de l'unité portable (PE).

8. Système de communication (KS) selon la revendication 7,
**caractérisé en ce que**
une commande de commutation et de complément de service (CP) pour supporter le complément de service "abonné mobile dans un système de communication" (MT) est mise en place dans le dispositif de communication (PBX).

9. Système de communication (KS) selon l'une quelconque des revendications 7 à 8,
**caractérisé en ce que**
l'unité portable (PE) est réalisée par un terminal de communication mobile.

10. Système de communication (KS) selon l'une quelconque des revendications 7 à 9,
**caractérisé en ce que**
le système de communication (KE1) est un terminal de communication commandé par le dispositif de communication (PBX).

11. Système de communication (KS) selon l'une quelconque des revendications 7 à 10,
**caractérisé en ce que**
l'interface radio (BT) est conçue selon le standard Bluetooth.
